# EUROPÄISCHE PATENTSCHRIFT

(11) **EP 1 289 803 B1**
(45) Veröffentlichungstag und Bekanntmachung des Hinweises auf die Patenterteilung: **09.08.2006**
(21) Anmeldenummer: 01929308.3
(22) Anmeldetag: 03.04.2001
(51) Int. Cl.: B60S 1/34

(54) **VIERGELENKWISCHHEBEL**
FOUR BAR WIPER-ARM
BRAS D'ESSUIE-GLACE A QUATRE ARTICULATIONS

(30) Priorität: 30.05.2000 DE 10026819
(43) Veröffentlichungstag der Anmeldung: 12.03.2003
(73) Patentinhaber: ROBERT BOSCH GMBH, 70442 Stuttgart (DE)
(72) Erfinder: ZIMMER, Joachim, 77880 Sasbach (DE)
(86) Internationale Anmeldenummer: PCT/DE2001/001282
(87) Internationale Veröffentlichungsnummer: WO 2001/092072

(56) Entgegenhaltungen:
- EP-A- 0 806 330
- DE-A- 1 630 196
- DE-A- 3 900 525
- FR-A- 2 772 326
- PATENT ABSTRACTS OF JAPAN vol. 1995, no. 10, 30. November 1995 (1995-11-30) & JP 07 186890 A (MITSUBISHI AUTOMOB ENG CO LTD;OTHERS: 01), 25. Juli 1995 (1995-07-25)

## Beschreibung

### Stand der Technik

Die Erfindung geht von einem Viergelenkwischhebel nach dem Oberbegriff des Anspruchs 1 aus, der aus der DE-A-1 630 196 bereits bekannt ist.

In der Regel werden Wischeranlagen für Kraftfahrzeuge mit mehreren Scheibenwischern mit deren Wischerlagern direkt oder indirekt über eine Platine an der Fahrzeugkarosserie befestigt. Ein Wischermotor mit einem daran angebauten Getriebe treibt über eine Kurbel und Gelenkstangen weitere Kurbeln an, die mit einer Antriebswelle für jeden Scheibenwischer fest verbunden sind.

Ferner ist es möglich, dass die Abtriebswelle des Wischermotors einen Viergelenkwischhebel antreibt. Dieser besitzt einen schwenkbaren Antriebshebel; der auf einer Antriebsachse sitzt und über ein Koppelelement gelenkig mit einem Lenker verbunden ist. Der Lenker sitzt mit seinem anderen Ende auf einer ortsfesten Achse. Auf Grund langer Lenker benötigen sie relativ viel Bauraum. An dem Koppelelement ist ein Befestigungsteil eines Wischarms angeformt, an dem über ein Abklappgelenk ein Gelenkteil des Wischarms befestigt ist. Der Antriebshebel kann direkt von einer Abtriebswelle des Wischermotors oder über eine Kurbel und Gelenkstangen angetrieben werden. Die Kinematik des Viergelenkwischhebels bewirkt eine kombinierte Hub-Schwenkbewegung des Scheibenwischers. Dadurch kann der Scheibenwischer, dessen Antriebswelle mehr zur Mitte der Fahrzeugscheibe angeordnet ist, bei einem Gleichlauf der Scheibenwischer besser der eckigen Kontur einer Fahrzeugscheibe folgen und wird deshalb zum Vergrößern des Sichtfelds und des Komforts in Wischanlagen häufig auf der Beifahrerseite verwendet.

Der Wischbereich eines Scheibenwischers wird durch eine Parklage und eine Umkehrlage begrenzt. Von der Parklage aus, die häufig in der unteren Stellung in einer so genannten Haubenspalte zwischen der Motorhaube und der Fahrzeugscheibe liegt, bewegt sich der Scheibenwischer nach oben bis in die Umkehrlage und anschließend wieder zurück.

Die Scheibenwischer besitzen einen Wischarm, umfassend das Befestigungsteil und ein daran angelenktes Gelenkteil, an dem eine Wischstange angelenkt oder angeformt ist. Das freie Ende der Wischstange ist gelenkig mit einem Wischblatt verbunden, dessen Wischleiste mit ihrer Wischlippe während der Schwenkbewegung zwischen der Parklage und der Umkehrlage über die Fahrzeugscheibe bewegt wird.

Aus der DE-A-1 630 196 ist ein Viergelenkwischhebel mit einem Antriebshebel bekannt, der mit einer Antriebswelle drehfest verbunden und über ein Koppelelement an einem Lenker angelenkt ist, der in einer Lagerstelle schwenkbar an einer Fahrzeugkarosserie gelagert ist. Das Koppelelement ist über ein Kugelgelenk mit dem Lenker verbunden. In einer Parklage des Scheibenwischers schließt der Antriebshebel mit dem Koppelelement einen Winkel von ungefähr 90° ein.

Aus der DE-C-36 21 233 ist ein Wischblatt zum Reinigen von gekrümmten Scheiben von Kraftfahrzeugen bekannt. Um ein gutes Wischergebnis auf einer ebenen Fahrzeugscheibe zu erreichen, müsste das Wischblatt eines Scheibenwischers so angeordnet werden, dass seine Längsmittelebene senkrecht auf der Scheibe steht, wenn das Wischblatt entlastet ist und eine an die Wischleiste angeformte Wischlippe die Scheibenoberfläche lediglich berührt. Bei sphärisch gekrümmten Fahrzeugscheiben ändert sich die Neigung dieser Längsmittelebene zur Scheibenoberfläche über das gesamte Wischfeld. Ferner ändert sich die Neigung der Längsmittelebene auch in Längsrichtung des Wischblatts. Die bei der ebenen Scheibe beschriebene optimale Ausrichtung kann bei sphärisch gekrümmten Fahrzeugscheiben während des Wischbetriebs nur punktuell und in Längsrichtung des Wischblatts wandernd erreicht werden. Dabei sind die Abweichungen von der Senkrechten, der Normalen zur Fahrzeugscheibe, die in Winkelgraden gemessen und Normalenabweichungen oder Normalenfehler genannt werden, in den stärker gekrümmten Seitenbereichen der Fahrzeugscheibe größer als in den ebenen Mittelbereichen. Die Flexibilität des Wischgummis kann die Normalenabweichung nur teilweise ausgleichen.

In der Praxis wird der erforderliche Anstellwinkel des Wischblatts relativ zur Scheibe und damit der Normalenfehler meist durch Schrägstellen der Abtriebsachsen des Wischergestänges erzeugt. Das Wischblatt nimmt somit eine gewünschte, von einer senkrechten Lage zur Fahrzeugscheibe abweichende Lage ein. Da Wischeranlagen durch ein großes Längen/Breitenverhältnis gekennzeichnet sind, ergibt sich eine große Empfindlichkeit der Winkellage der Abtriebsachsen und damit des Normalenfehlers des Wischblatt, insbesondere in der Parklage. Zwar sind die Fertigungstoleranzen der einzelnen, zahlreichen Bauelemente des Scheibenwischers und seines Antriebs gering, jedoch ist die Summe der Toleranzen zusammen mit denen der Befestigung an der Fahrzeugkarosserie und dieser selbst so groß, dass ein optimaler Anstellwinkel in einer Serienfertigung nicht gewährleistet ist. Zum Ausgleich der Fertigungstoleranzen stellt man deshalb die Längsmittelebene des Scheibenwischers zur Fahrzeugscheibe durch Schränken des Wischarms bei der Montage so ein, dass der gewünschte Normalenfehler erreicht wird. Die Einstellung in der Parklage, die eine möglichst große Bandbreite bezüglich des Anstellwinkels zulassen soll, darf jedoch nicht zu erheblichen Abweichungen in der Umkehrlage des Scheibenwischers führen.

Aus der DE-A-44 28 371 ist eine Wellennabenverbindung eines Scheibenwischers bekannt, bei der die Antriebswelle im Verbindungsbereich einen von der Kreisform abweichenden, insbesondere einen polygonalen, Querschnitt und einen Absatz aufweist. Das Befestigungsteil liegt mit einem Rand einer Ausnehmung an dem Absatz oder einer Zwischenscheibe an, wobei sich die Ausnehmung zum Ende der Antriebswelle hin konisch erweitert. In die Ausnehmung ist ein passendes, konisches Klemmteil eingesetzt, das durch eine Schraubenmutter gegen das Befestigungsteil gedrückt wird. Das Klemmteil besitzt einen Durchgang für die Antriebswelle, dessen Querschnittprofil dem der Antriebswelle entspricht.

Aus der US-A-3 085 821 ist eine ähnliche Wellennabenverbindung eines Scheibenwischers bekannt. Das Klemmteil besitzt einen Durchgang für die Antriebswelle, der zu einem zylindrischen oder konischen Bereich der Antriebswelle mit einer Rändelung bzw. gezackten Oberfläche passt. Durch die konische Verbindung zwischen dem Befestigungsteil und dem Klemmteil und gegebenenfalls durch die konische Verbindung zwischen dem Klemmteil und der Antriebswelle wird die gezackte Oberfläche des Befestigungsteils und der Antriebswelle in die bis dahin weitgehendst glatte Oberfläche des Klemmteils gedrückt und verformt diese dauerhaft. Das Klemmteil besteht zu diesem Zweck aus einem elastomeren Werkstoff oder einem relativ weichen Nichteisenmetall. Neben einem Kraftschluss wird durch viele kleine Seitenflächen der Zacken ein unterstützender Formschluss erreicht.

### Vorteile der Erfindung

Nach der Erfindung ist der Antriebshebel in der Parklage um eine Verstellachse verstellbar, die etwa parallel zum Koppelelement verläuft und die Längsachse der Antriebswelle schneidet. Ferner ist an ihm ein Befestigungsteil eines Wischarms befestigt oder angeformt, an dem über ein Abklappgelenk ein Gelenkteil mit einer Wischstange angelenkt ist. Mit dieser ist ein Wischblatt gelenkig verbunden.

Beim Schwenken des Antriebshebels um die Verstellachse wird das Koppelelement mit dem Befestigungsteil um seine Längsachse gedreht und damit der gewünschte Normalenfehler des Wischblatts eingestellt. Die Einstellung kann auf einfache Weise in der Parklage des Scheibenwischers vorgenommen werden. Der Verstellbereich sollte vorzugsweise + - 3° betragen. Dieser wird zusätzlich zur Schrägstellung der beiden Hauptachsen des Antriebshebels erreicht.

Der gewünschte Normalenfehler des Wischblatts kann während der Montage des Scheibenwischers frei gewählt werden, so dass Fertigungstoleranzen diesen nicht negativ beeinflussen. Wird der Antriebshebel um die Verstellachse gedreht, verändert sich die Höhenlage des Koppelelements. Damit dadurch der Viergelenkwischhebel nicht verspannt und der Bewegungsablauf behindert wird, ist es zweckmäßig, dass das Koppelelement aus zwei Teilen besteht, wobei das erste Koppelteil am Antriebshebel angelenkt ist und über ein Drehgelenk, dessen Drehachse quer zur Längsrichtung des Koppelelements verläuft, mit einem zweiten Koppelteil verbunden ist. Dieses ist über ein Kugelgelenk mit dem Lenker verbunden. Dadurch kann der Höhenversatz ausgeglichen werden.

In Ausgestaltung der Erfindung bildet die Kontaktfläche zwischen dem Klemmteil und dem Antriebshebel einen Teil der Oberfläche einer Kugel, während die Anlagefläche zwischen dem Antriebshebel und dem Absatz der Antriebswelle einen Teil einer Mantelfläche eines Zylinders bildet, dessen Zylinderachse durch den Mittelpunkt der Kugel und parallel zur Längsrichtung des Wischblatts verläuft. Somit kann auf kleinem Bauraum der Antriebshebel und damit der Wischarm um seine Längsachse stufenlos verstellt werden, wenn die Anlagefläche glatt ist. Eine stufenweise Verstellung ist möglich, wenn die Anlagefläche eine zur Zylinderachse parallele Riffelung aufweist. Die Riffelung dient vorteilhafterweise als Einstellraster. Ferner wird die Kraftschlussverbindung durch eine Formschlussverbindung unterstützt, so dass große Kräfte übertragen werden können.

Die Verbindung zwischen der Antriebswelle und dem Antriebshebel muss sicher sein und große Drehmomente übertragen können. Trotzdem darf sie auf das Anzugsmoment der Schraubenverbindung nicht in dem Sinne empfindlich reagieren, dass sich beim Anziehen der Schraube die gewählte Einstellung ungewollt verändert. Es ist daher gemäß einer Ausgestaltung vorteilhaft, dass die Zylinderachse der Anlagefläche des Antriebshebels durch den Kugelmittelpunkt der Kontaktfläche zwischen dem Klemmteil und dem Antriebshebel verläuft, wobei die Zylinderachse vorteilhaft innerhalb des Befestigungsbereichs des Antriebshebels liegt.

Nach einer Ausgestaltung der Erfindung wird vorgeschlagen, dass der Einstellwinkel δ₁ oder δ₂ des Antriebshebels um die Zylinderachse der Anlagefläche durch einen Anschlag begrenzt ist. Hierdurch wird vermieden, dass unbeabsichtigt Einstellwinkel am Fahrzeug montiert werden, die völlig unbrauchbar sind. Die Anschläge schließen den optimalen Anstellwinkel ein, von dem abweichende Einstellungen möglich sind, die zwar nicht optimal, aber brauchbar sind. In einfacher Weise werden die Anschläge von einem länglichen Loch im Antriebshebel gebildet, das quer zur Zylinderachse verläuft und mit der Antriebswelle zusammenwirkt.

Die zylindrische Anlagefläche kann unmittelbar an der Antriebswelle angeformt sein, zweckmäßigerweise ist sie jedoch in eine separate Stützscheibe geformt, die sich nach der Montage an einem Absatz der Antriebswelle abstützt. Die Stützscheibe ist drehbar auf der Antriebswelle geführt, so dass die Längsrichtung des Antriebshebels und damit die Längsrichtung des Wischarms um die Antriebswellenachse gedreht und ausgerichtet werden kann, bevor die Drehmomentverbindung durch das Klemmteil und die Verschraubung hergestellt wird. Gleichzeitig kann der Antriebshebel zwischen den beiden Anschlägen um die Verstellachse gedreht werden, um den Anstellwinkel des Wischblatts zur Fahrzeugscheibe einzustellen.

Das Drehmoment wird zweckmäßigerweise von der Antriebswelle über ein unrundes Profil, vorzugsweise über eins mit einem polygonalen Querschnitt, auf das Klemmteil übertragen, das es seinerseits durch einen vorwiegenden Kraftschluss über die kugelförmige Kontaktfläche auf den Antriebshebel überträgt. Dadurch wird das Drehmoment an einem kleinen Umfang durch einen sicheren Formschluss übertragen, während der Kraftschluss an einem größeren Durchmesser vorgesehen ist und somit durch kleinere Anpresskräfte größere Momente übertragen werden können. Der Kraftschluss kann durch einen Formschluss unterstützt werden, indem die Kugelfläche des Antriebshebels aufgeraut oder geriffelt ist. Dabei verläuft die Riffelung am Klemmteil zweckmäßigerweise unter einem Winkel zur Riffelung am Antriebshebel, so dass sich die Richtungen kreuzen und sich ein Formschluss ergibt, der sowohl in Richtung des zu übertragenden Drehmoments als auch in Richtung der Verstellkräfte wirkt, wobei sich die Riffelungen teilweise ineinander eingraben können. Durch die Verformbarkeit der Riffelung können auch Fertigungstoleranzen ausgeglichen werden.

Nach einer weiteren Ausgestaltung der Erfindung weist das Klemmteil an seinem Umfang längs verlaufenden Nuten auf, die kurz vor der größeren Stirnfläche enden. Die Nuten bewirken, dass sich das Klemmteil elastisch verformen und dadurch besser an die Vertiefung des Antriebshebels anpassen kann. Da die Nuten nicht bis zur Stirnfläche des Klemmteils durchgezogen sind, sondern kurz vorher enden, bleibt eine glatte Stirnfläche erhalten. Ferner sind die Nuten nach außen hin geschützt.

Vor der Endmontage können bereits einige Teile der Verbindung vormontiert werden. Hierzu dienen zum einen ein Sicherungsring aus Kunststoff, der die Stützscheibe auf der Antriebswelle drehbar befestigt und zum anderen in einer anderen Ausführung ein Kunststoffclips, der die Stützscheibe um die Zylinderachse schwenkbar am Antriebshebel festhält. Hierbei weist der Antriebshebel einen Bund auf, an dem der Kunststoffclip gehalten ist. Ferner kann der Kunststoffclip mit Vorsprüngen in Ausnehmungen des Antriebshebels eingreifen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Darstellung einer Wischeranlage in der Parklage,
- Fig. 2: einen Querschnitt durch ein Wischblatt entsprechend der Linie II-II in Fig. 1 im vergrößerten Maßstab,
- Fig. 3: einen Querschnitt durch ein erfindungsgemäßes Wischerlager entsprechend einer Linie III-III in Fig. 1 im vergrößerten Maßstab,
- Fig. 4: eine perspektivische Darstellung eines Viergelenkwischhebels im vergrößerten Maßstab,
- Fig. 5: in einer Explosionsdarstellung einen Antriebshebel mit einer Antriebswelle,
- Fig. 6: einen vergrößerten Teillängsschnitt durch einen Antriebshebel im Anschlussbereich an eine Antriebswelle,
- Fig. 7: eine vergrößerte Schnittdarstellung einer montierten Stützscheibe,
- Fig. 8: ein Diagramm zur Darstellung der Auswirkung der Nachschränkung eines Wischarms und
- Fig. 9: ein Diagramm zur Darstellung der Auswirkung der Einstellung eines Wischarms in einem Viergelenkwischhebel.

### Beschreibung der Ausführungsbeispiele

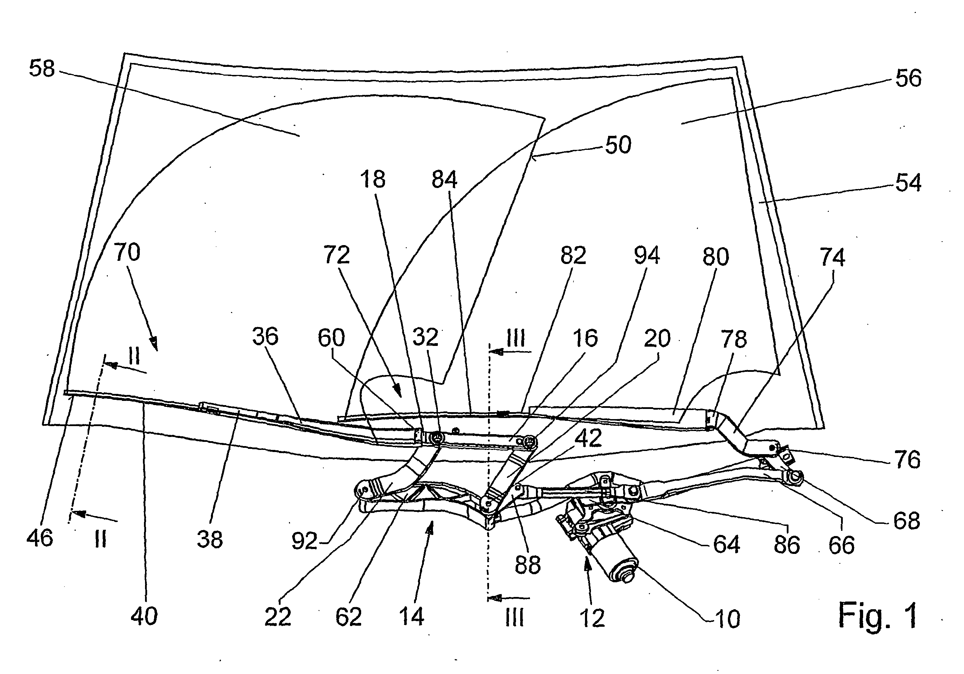

Der Antrieb einer Wischeranlage, bestehend aus einem Wischermotor 10 und einem daran angebauten Getriebe 12, treibt über eine Kurbel 64 und Hebelmechanismen zwei Scheibenwischer 70 bzw. 72 an (Fig. 1). Auf der Fahrerseite umfasst der Hebelmechanismus eine gelenkig mit der Kurbel 64 verbundene Gelenkstange 66, die wiederum an ihrem anderen Ende gelenkig mit einer weiteren Kurbel 68 einer Antriebswelle 76 verbunden ist. Auf dieser sitzt am anderen Ende ein Befestigungsteil 74 des Scheibenwischers 72. An das Befestigungsteil 74 schließt sich über ein Abklappgelenk 78 ein Gelenkteil 80 an, das eine Wischstange 82 mit einem Wischblatt 84 hält. Während der Schwenkbewegung des Befestigungsteils 74 überstreicht das Wischblatt 84 ein Wischfeld 56 auf einer Fahrzeugscheibe 54.

Ein Wischfeld 58 des Scheibenwischers 70 auf der Beifahrerseite unterscheidet sich von dem der Fahrerseite dadurch, dass das äußere Ende des Scheibenwischers einen relativ großen Bereich in der oberen Ecke der Fahrzeugscheibe 54 überwischt. Um das Wischfeld 58 zu erhalten, muss der Scheibenwischer 70 eine Hub-Schwenkbewegung ausführen, die durch einen Viergelenkwischhebel 14 erzeugt wird. Dieser umfasst einen Antriebshebel 20, einen Lenker 22 und ein Koppelelement 16 mit einem angeformten Befestigungsteil 18.

Der Antriebshebel 20 sitzt auf einer Antriebswelle 90, die in einer Lagerstelle 42 an einer Platine 62 gelagert ist. Diese ist an einer nicht dargestellten Fahrzeugkarosserie befestigt. Die Antriebswelle 90 wird von einer Kurbel 88 angetrieben. Eine Gelenkstange 86 verbindet die Kurbel 88 mit der Kurbel 64 am Getriebe 12. Ein Lenker 22 ist in einer Lagerstelle 92 der Platine 62 schwenkbar gelagert und über ein Kugelgelenk 32 mit dem Koppelelement 16 verbunden, das seinerseits über ein Gelenk 94 mit dem Antriebshebel 20 verbunden ist.

Eine Verlängerung des Koppelelements 16 auf der anderen Seite des Gelenks 32 bildet ein Befestigungsteil 18 des Scheibenwischers 70, an das sich das Gelenkteil 36 mit einem Abklappgelenk 60 und mit der Wischstange 38 sowie dem Wischblatt 40 anschließen. Während eines Wischzyklus bewegt sich der Scheibenwischer 70 aus einer Parklage 46 in Richtung Fahrerseite bis in eine Umkehrlage 50.

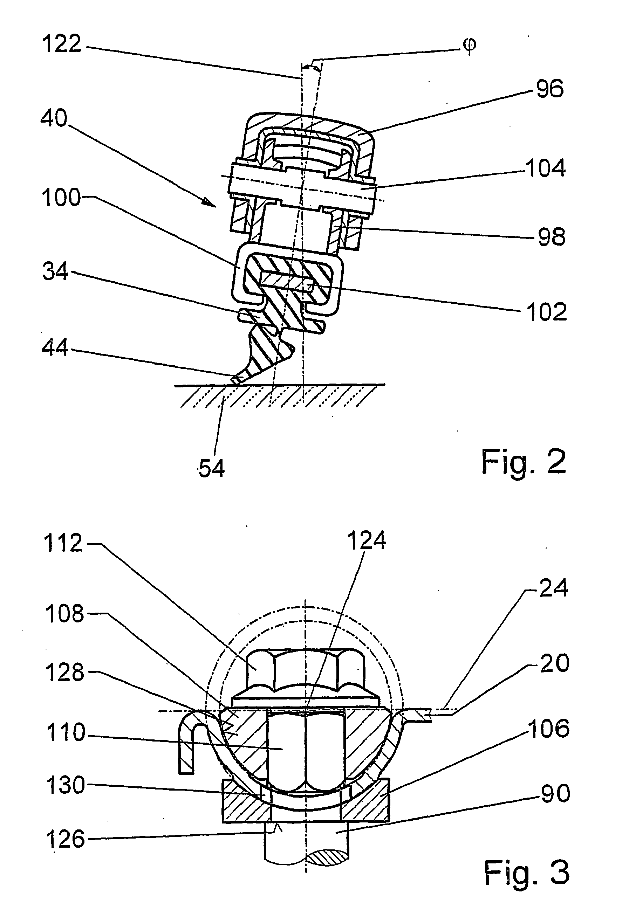

Das Wischblatt 40 umfasst einen übergeordneten Bügel 96 und einen Krallenbügel 98, die über einen Gelenkstift 104 gelenkig miteinander verbunden sind (Fig. 2). Ein Wischgummi 34 wird von mehreren Krallen 100 des Krallenbügel 98 gehalten. Im Profilrücken des Wischgummis 34 befindet sich eine Federschiene 102, die den Anpressdruck des Wischblatts 40 gleichmäßig auf eine am Wischgummi 34 angeformte Wischlippe 44 verteilt.

Das Wischblatt 40 schließt in der Parklage mit einer Normalen 122 zur Fahrzeugscheibe 54 einen Winkel ϕ ein. Dieser Winkel ϕ, der auch Normalenfehler genannt wird, hat einen gewünschten Wert, der durch Fertigungstoleranzen von seinem Sollwert abweichen kann.

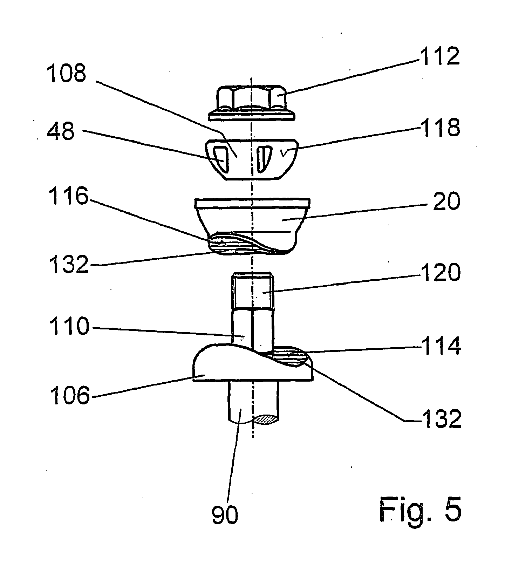

Um den Sollwert wieder zu erreichen, wird das Wischblatt 40 während der Montage des Scheibenwischers 70 in der Parklage 46 eingestellt, indem der Antriebshebel 20 um eine Verstellachse 24 verdreht wird. Zu diesem Zweck stützt sich der Antriebshebel 20 über eine zylindrische Anlagefläche 116 an einer entsprechenden zylindrischen Anlagefläche 114 an der Antriebswelle 90 ab. Zweckmäßigerweise ist auf das freie Ende der Antriebswelle 90 eine Stützscheibe 106 aufgefädelt, die sich an einem Absatz 126 abstützt, aber um die Antriebswelle 90 drehbar geführt ist (Fig. 3 und 5). In die Stützscheibe 106 ist zum Antriebshebel 20 hin die zylindrische Anlagefläche 114 eingearbeitet. Die gemeinsame Achse der Anlageflächen 114, 116 ist gleichzeitig die Verstellachse 24.

Zudem besitzt der Antriebshebel 20 eine Vertiefung 128, in die ein Klemmteil 108 eingesetzt wird. Eine Schraubenmutter 112, die in das Gewinde 120 eingreift, verspannt das Klemmteil 108, den Antriebshebel 20 und die Stützscheibe 106 mit dem Absatz 126 der Antriebswelle 90. Der Antriebshebel 20 ist zweckmäßigerweise aus Blech geformt, wobei die Vertiefung 128 tiefgezogen ist.

Die Zylinderfläche 116 am Antriebshebel 20 ist so ausgerichtet, dass die Verstellachse 24 in der Parklage 46 etwa parallel zur Längsachse des Koppelelements 16 verläuft. Ferner bildet die Kontaktfläche 118, 128 zwischen dem Klemmteil 108 und dem Antriebshebel 20 einen Teil der Oberfläche einer Kugel, wobei die Verstellachse 24 zweckmäßigerweise durch den Kugelmittelpunkt 124 verläuft. Somit treten bei dem Verspannen des Antriebshebels 20 durch eine Schraubenmutter 112 keine Stellmomente auf, durch die die Einstellung ungewollt wieder verändert werden könnte. Um den Verstellbereich zu begrenzen, ist das Loch 130 am Antriebshebel 20 in Stellrichtung länglich ausgebildet, so dass es an der Antriebswelle 90 jeweils zu beiden Seiten einen Anschlag bildet. Vorteilhafterweise besitzen die Zylinderflächen 114, 116 eine parallel zur Verstellachse 24 verlaufende Riffelung 132, welche ein Rastermaß für die Einstellung bilden und zusätzlich die vorgenommene Einstellung sichern.

Das Klemmteil 108 besitzt ein inneres Mitnahmeprofil 110, das zum äußeren Profil der Antriebswelle 90 passt und das Antriebsmoment formschlüssig von der Antriebswelle 90 auf das Klemmteil 108 überträgt. Es hat zweckmäßigerweise einen von der Kreisform abweichenden Querschnitt, vorzugsweise einen polygonalen. Durch die formschlüssige Verbindung zwischen dem Klemmteil 108 und der Antriebswelle 90 lassen sich auf kleinem Durchmesser große Drehmomente sicher übertragen. Der deutliche größere Durchmesser des äußeren Umfangs des Klemmteils 108 ist besser geeignet, das Antriebsmoment durch Kraftschluss auf den Antriebshebel 20 zu übertragen. Damit sich das Klemmteil 108 elastisch der Vertiefung des Antriebshebels 20 besser anpassen kann, besitzt es längs verlaufende Nuten 48.

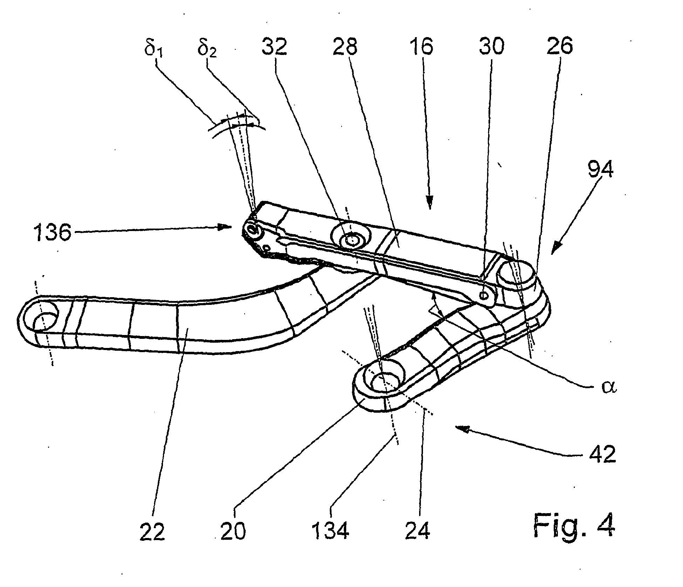

In der Parklage 46 schließt der Antriebshebel 20 des Scheibenwischers 70 mit dem Koppelelement 16 einen Winkel α von ungefähr 90° ein (Fig. 4). Wird nun der Antriebshebel 20 an der Lagerstelle 42 von einer Ausgangsstellung 134 um einen bestimmten Winkel geschwenkt, so wird diese Schwenkung auf das Koppelteil 16 übertragen und eine Aufnahmebohrung 136 für das Befestigungsteil 18 weist ausgehend von einer Ausgangslage 134 einen Einstellwinkelbereich von δ₁ oder δ₂ auf.

Indem der Antriebshebel 20 um die Verstellachse 24 geschwenkt wird, verändert sich gleichzeitig seine Höhenlage am Gelenk 94. Um einen damit entstandenen Höhenunterschied zum ortsfesten Lenker 22 auszugleichen, weist das Koppelelement 16 ein erstes Koppelteil 26 auf, das am Gelenk 94 mit dem Antriebshebel 20 verbunden ist und über ein Drehgelenk 30 mit einem zweiten Koppelteil 28 verbunden ist. Das zweite Koppelteil 28 ist über ein Kugelgelenk 32 mit dem Lenker 22 verbunden. Dadurch kann sich Bewegung der Viergelenkwischhebel (14) zwangfrei bewegen.

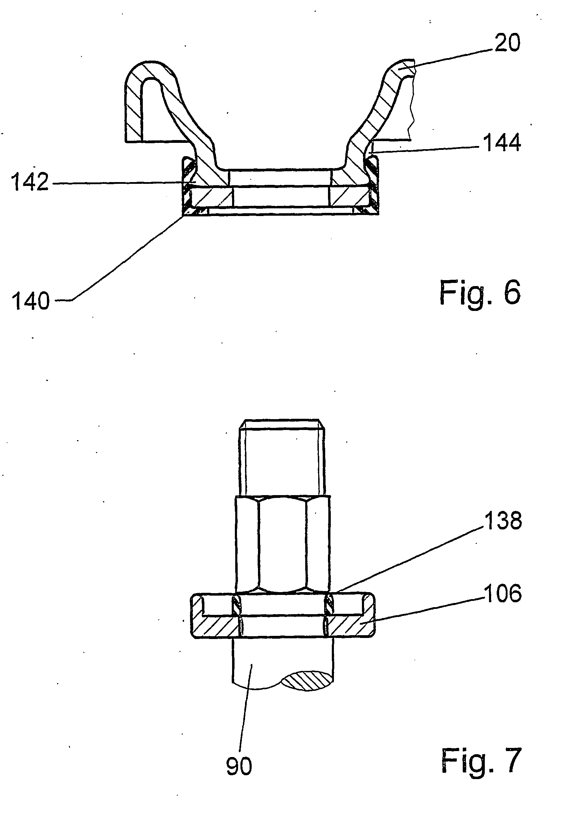

Die Montage des Antriebshebels 20 kann erleichtert werden, wenn die Stützscheibe 106 vor der Montage mit einem anderen Bauteil verbunden wird. Hierzu dient ein Sicherungsring 138 (Fig. 7), der die Stützscheibe 106 auf der Antriebswelle 90 hält. Eine andere Möglichkeit ist in Fig. 6 dargestellt, wobei gemäß der linken Hälfte der Darstellung ein Kunststoffclip 140 hinter einen Bund 142 des Antriebshebels 20 greift oder wie die rechte Seite der Darstellung zeigt, in einer entsprechenden Ausnehmung 144 einrastet. Der Bund 142 und die Ausnehmung 144 müssen so angeordnet und gestaltet sein, dass sie die Verstellung des Antriebshebels 20 um die Verstellachse 24 nicht behindern.

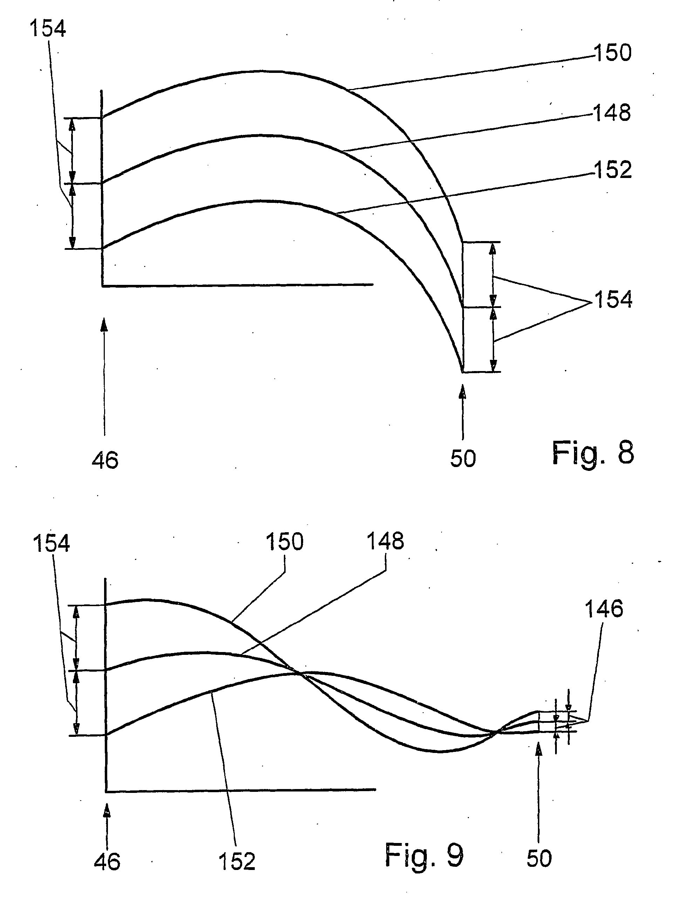

In Fig. 8 zeigt ein Diagramm, dass bei herkömmlichen, durch Verschränkung des Wischarms eingestellten Scheibenwischern eine in der Parklage 46 vorhandene Abweichung 154 vom Normalenfehler über das gesamte Wischfeld 56, 58 bis hin zur Umkehrlage 50 unverändert gegenüber einer Kurve 150, welche eine mittlere Ausgangslage darstellt, erhalten bleibt. Die Kurve 150 kennzeichnet den maximalen Verstellbereich in die eine Richtung, während die Kurve 152 den maximalen Verstellbereich in die entgegengesetzte Richtung markiert. Demgegenüber zeigt Fig. 9 entsprechende Kurven 148, 150, 152 bei dem erfindungsgemäßen Viergelenkwischhebel 14, der über seinen Antriebshebel 20 eingestellt wird. Hierbei wirkt sich eine in der Parklage 46 eingestellte Abweichung 154 vom Normalenfehler über das gesamte Wischfeld 56, 58 unterschiedlich aus und zeigt insbesondere in der Umkehrlage 50 eine wesentlich kleinere Abweichung 146. Daher ist es zweckmäßig, den Normalenfehler ϕ nur in der Parklage 46 anzupassen.

### Bezugszeichen

- 10: Wischermotor
- 12: Getriebe
- 14: Viergelenkwischhebel
- 16: Koppelelement
- 18: Befestigungsteil
- 20: Antriebshebel
- 22: Lenker
- 24: Verstellachse
- 26: erstes Koppelteil
- 28: zweites Koppelteil
- 30: Drehgelenk
- 32: Kugelgelenk
- 34: Wischgummi
- 36: Gelenkteil
- 38: Wischstange
- 40: Wischblatt
- 42: Lagerstelle
- 44: Wischlippe
- 46: Parklage
- 48: Nut
- 50: Umkehrlage
- 54: Windschutzscheibe
- 56: Wischfeld
- 58: Wischfeld
- 60: Abklappgelenk
- 62: Platine
- 64: Kurbel
- 66: Gelenkstange
- 68: Kurbel
- 70: Scheibenwischer
- 72: Scheibenwischer
- 74: Befestigungsteil
- 76: Antriebswelle
- 78: Abklappgelenk
- 80: Gelenkteil
- 82: Wischstange
- 84: Wischblatt
- 86: Gelenkstange
- 88: Kurbel
- 90: Antriebswelle
- 92: Lagerstelle
- 94: Gelenk
- 96: übergeordneter Bügel
- 98: Krallenbügel
- 100: Kralle
- 102: Federschiene
- 104: Gelenkstift
- 106: Stützscheibe
- 108: Klemmteil
- 110: Mitnahmeprofil
- 112: Schraubenmutter
- 114: Zylinderfläche
- 116: Zylinderfläche
- 118: Kugelfläche
- 120: Gewinde
- 122: Normale
- 124: Kugelmittelpunkt
- 126: Absatz
- 128: Vertiefung
- 130: Loch
- 132: Riffelung
- 134: Ausgangsstellung
- 136: Aufnahmebohrung
- 138: Sicherungsring
- 140: Kunststoffclip
- 142: Bund
- 144: Ausnehmung
- 146: Abweichung
- 148: Kurve
- 150: Kurve
- 152: Kurve
- 154: Abweichung

- α: Winkel
- ϕ: Normalenfehler
- δ₁: Einstellwinkel
- δ₂: Einstellwinkel

## Patentansprüche

1. Viergelenkwischhebel (14) mit einem Antriebshebel (20), der mit einer Antriebswelle (90) drehfest verbunden und über ein Koppelelement (16) an einem Lenker (22) angelenkt ist, der in einer Lagerstelle (92) schwenkbar an einer Fahrzeugkarosserie gelagert ist, wobei der Antriebshebel (20) in einer Parklage (46) des Scheibenwischers (70) mit dem Koppelelement (16) einen Winkel (α) von ungefähr 90° einschließt und das Koppelelement (16) über ein Kugelgelenk (32) mit dem Lenker (22) verbunden ist, **dadurch gekennzeichnet, dass** der Antriebshebel (20) in dieser Parklage (46) um eine Verstellachse (24), die etwa parallel zum Koppelelement (16) verläuft und die Längsachse der Antriebswelle (90) schneidet, verstellbar ist.

2. Viergelenkwischhebel (14) nach Anspruch 1, **dadurch gekennzeichnet, dass** das Koppelelement (16) ein erstes Koppelteil (26) hat, das an dem Antriebshebel (20) angelenkt ist, und ein zweites Koppelteil (28) besitzt, das über das Kugelgelenk (32) an dem Lenker (22) angelenkt ist, wobei beide Koppelteile (26, 28) über ein Drehgelenk (30) miteinander verbunden sind, dessen Drehachse quer zur Längsrichtung des Koppelteils (16) verläuft.

3. Viergelenkwischhebel (14) nach einem der vorhergehenden Ansprüche, **dadurch gekennzeichnet, dass** an dem lenkerseitigen Ende des Koppelelements (16) ein Befestigungsteil (18) angeformt ist, an dem ein Gelenkteil (36) des Scheibenwischers (70) angelenkt ist.

4. Viergelenkwischhebel (14) nach einem der vorhergehenden Ansprüche, **dadurch gekennzeichnet, dass** die Antriebswelle (90) durch eine sich erweiternde Vertiefung (128) des Antriebshebels (20) gesteckt ist und eine Schraubenmutter (112) den Antriebshebel (20) über ein Klemmteil (108), das der Vertiefung (128) angepasst ist, gegen einen Absatz (126) der Antriebswelle (90) verspannt ist und dass die Kontaktflächen (118, 128) zwischen dem Klemmteil (108) und dem Antriebshebel (20) einen Teil der Oberfläche einer Kugel bilden und dass sich der Antriebshebel (20) über Zylinderflächen (114, 116) am Absatz (126) abstützt, wobei die Achse der Zylinderflächen (114, 116) die Verstellachse (24) ist und durch den Kugelmittelpunkt (124) verläuft.

5. Viergelenkwischhebel (14) nach Anspruch 4, **dadurch gekennzeichnet, dass** die Zylinderfläche (114) in eine Stützscheibe (106) geformt ist, die sich an dem Absatz (126) der Antriebswelle (90) abstützt und um die Antriebswelle (90) drehbar ist.

6. Viergelenkwischhebel (14) nach einem der vorhergehenden Ansprüche, **dadurch gekennzeichnet**, das der Einstellwinkel (δ₁, δ₂) um die Verstellachse (24) durch einen Anschlag (130) begrenzt ist.

7. Viergelenkwischhebel (14) nach Anspruch 6, **dadurch gekennzeichnet**, das der Anschlag von einem in Stellrichtung länglichen Loch (130) im Antriebshebel (20) mit der Antriebswelle (90) gebildet wird.

8. Viergelenkwischhebel (14) nach einem der vorhergehenden Ansprüche, **dadurch gekennzeichnet**, das die Verstellachse (24) innerhalb des Befestigungsbereichs des Antriebshebels (20) verläuft.

9. Viergelenkwischhebel (14) nach einem der vorhergehenden Ansprüche, **dadurch gekennzeichnet**, das der Antriebshebel (20) aus Blech geformt und die Vertiefung (128) tiefgezogen ist.

10. Viergelenkwischhebel (14) nach einem der vorhergehenden Ansprüche, **dadurch gekennzeichnet, dass** das Klemmteil (108) über ein Mitnahmeprofil (110) mit der Antriebswelle (90) verbunden ist, das im Querschnitt von der Kreisform abweicht.

11. Viergelenkwischhebel (14) nach Anspruch 10, **dadurch gekennzeichnet, dass** das Mitnahmeprofil (110) einen polygonalen Querschnitt hat.

12. Viergelenkwischhebel (14) nach einem der Ansprüche 5 bis 11, **dadurch gekennzeichnet, dass** die Stützscheibe (106) durch einen Sicherungsring (138) aus Kunststoff auf der Antriebswelle (90) drehbar befestigt ist.

13. Viergelenkwischhebel (14) nach einem der Ansprüche 5 bis 11, **dadurch gekennzeichnet, dass** die Stützscheibe (106) an dem Antriebshebel (20) um die Verstellachse (24) schwenkbar befestigt ist.

14. Viergelenkwischhebel (14) nach Anspruch 13, **dadurch gekennzeichnet**, das die Stützscheibe (106) mittels eines Kunststoffclips (140) am Antriebshebel (20) befestigt ist.

15. Viergelenkwischhebel (14) nach Anspruch 14, **dadurch gekennzeichnet, dass** der Antriebshebel (20) einen Bund (142) aufweist, an dem der Kunststoffclip (140) gehalten ist.

16. Viergelenkwischhebel (14) nach Anspruch 15, **dadurch gekennzeichnet, dass** der Antriebshebel (20) Ausnehmungen (144) aufweist, in die der Kunststoffclip (140) einrastet.

17. Viergelenkwischhebel (14) nach einem der vorhergehenden Ansprüche, **dadurch gekennzeichnet, dass** die Zylinderflächen (114, 116) eine zur Verstellachse (24) parallel verlaufende Riffelung (132) aufweisen.

18. Viergelenkwischhebel (14) nach einem der vorhergehenden Ansprüche, **dadurch gekennzeichnet, dass** der Antriebshebel (20) und das Klemmteil (108) an der Kugelfläche (118) aufgeraut oder so geriffelt ist, das sich die Riffelung (132) des Antriebshebels (20) mit der Riffelung (132) des Klemmteils (108) kreuzt.

19. Viergelenkwischhebel (14) nach einem der vorhergehenden Ansprüche, **dadurch gekennzeichnet, dass** das Klemmteil (108) an seinem Umfang längs verlaufende Nuten (48) aufweist.

20. Viergelenkwischhebel (14) nach Anspruch 19, **dadurch gekennzeichnet, dass** die Nuten (48) kurz vor der größeren Stirnfläche enden.

21. Verfahren zum Einstellen eines Viergelenkwischhebels (14) nach einem der vorhergehenden Ansprüche, **dadurch gekennzeichnet, dass** der Normalenfehler (ϕ) nur in der Parklage (46) eingepasst wird.

## Claims

1. Four bar wiper arm (14) with a drive lever (20) which is connected in a rotationally fixed manner to a drive shaft (90) and is coupled via a coupling element (16) to a link (22) which is mounted pivotably on a vehicle body in a bearing (92), the drive lever (20) enclosing an angle (α) of approximately 90° with the coupling element (16) in a parking position (46) of the windscreen wiper (70), and the coupling element (16) being connected to the link (22) via a ball-and-socket joint (32), **characterized in that** the drive lever (20) can be displaced in this parking position (46) about an axis of displacement (24) which runs approximately parallel to the coupling element (16) and intersects the longitudinal axis of the drive shaft (90).

2. Four bar wiper arm (14) according to Claim 1, **characterized in that** the coupling element (16) has a first coupling part (26), which is coupled to the drive lever (20), and a second coupling part (28), which is connected to the link (22) via the ball-and-socket joint (32), the two coupling parts (26, 28) being connected to each other via a rotary joint (30), the axis of rotation of which runs transversely with respect to the longitudinal direction of the coupling part (16).

3. Four bar wiper arm (14) according to one of the preceding claims, **characterized in that** a fastening part (18) to which an articulated part (36) of the windscreen wiper (70) is coupled is integrally formed at the link end of the coupling element (16).

4. Four bar wiper arm (14) according to one of the preceding claims, **characterized in that** the drive shaft (90) is plugged through an expanding depression (128) of the drive lever (20), and a screw nut (112) clamps the drive lever (20) via a clamping part (108), which is matched to the depression (128), against a step (126) of the drive shaft (90), and **in that** the contact surfaces (118, 128) between the clamping part (108) and the drive lever (20) form part of the surface of a ball, and **in that** the drive lever (20) is supported on the step (126) via cylinder surfaces (114, 116), with the axis of the cylinder surfaces (114, 116) being the axis of displacement (24) and running through the ball centre point (124).

5. Four bar wiper arm (14) according to Claim 4, **characterized in that** the cylinder surface (114) is shaped into a supporting disc (106) which is supported on the step (126) of the drive shaft (90) and can be rotated about the drive shaft (90).

6. Four bar wiper arm (14) according to one of the preceding claims, **characterized in that** the angle of adjustment (δ₁, δ₂) about the axis of displacement (24) is restricted by a stop (130).

7. Four bar wiper arm (14) according to Claim 6, **characterized in that** the stop is formed by a hole (130), which is elongate in the adjustment direction, in the drive lever (20) together with the drive shaft (90).

8. Four bar wiper arm (14) according to one of the preceding claims, **characterized in that** the axis of displacement (24) runs within the fastening region of the drive lever (20).

9. Four bar wiper arm (14) according to one of the preceding claims, **characterized in that** the drive lever (20) is formed from sheet metal and the depression (128) is deep-drawn.

10. Four bar wiper arm (14) according to one of the preceding claims, **characterized in that** the clamping part (108) is connected to the drive shaft (90) via a carry-along profile (110) which deviates in cross section from the circular shape.

11. Four bar wiper arm (14) according to Claim 10, **characterized in that** the carry-along profile (110) has a polygonal cross section.

12. Four bar wiper arm (14) according to one of Claims 5 to 11, **characterized in that** the supporting disc (106) is fastened rotatably on the drive shaft (90) by a plastic securing ring (138).

13. Four bar wiper arm (14) according to one of Claims 5 to 11, **characterized in that** the supporting disc (106) is fastened to the drive lever (20) in a manner such that it can pivot about the axis of displacement (24).

14. Four bar wiper arm (14) according to Claim 13, **characterized in that** the supporting disc (106) is fastened to the drive lever (20) by means of a plastic clip (140).

15. Four bar wiper arm (14) according to Claim 14, **characterized in that** the drive lever (20) has a collar (142) on which the plastic clip (140) is held.

16. Four bar wiper arm (14) according to Claim 15, **characterized in that** the drive lever (20) has recesses (144) into which the plastic clip (140) latches.

17. Four bar wiper arm (14) according to one of the preceding claims, **characterized in that** the cylinder surfaces (114, 116) have a fluting (132) running parallel to the axis of displacement (24).

18. Four bar wiper arm (14) according to one of the preceding claims, **characterized in that** the drive lever (20) and the clamping part (108) on the ball surface (118) are roughened or fluted in such a manner that the fluting (132) of the drive lever (20) intersects the fluting (132) of the clamping part (108).

19. Four bar wiper arm (14) according to one of the preceding claims, **characterized in that** the clamping part (108) has grooves (48) running longitudinally on its circumference.

20. Four bar wiper arm (14) according to Claim 19, **characterized in that** the grooves (48) end shortly before the larger end surface.

21. Method for adjusting a four bar wiper arm (14) according to one of the preceding claims, **characterized in that** the vertical error (ϕ) is only adjusted in the parking position (46).

## Revendications

1. Bras d'essuie-glace à quatre articulations (14) comportant un levier d'entraînement (20) relié solidairement en rotation à un arbre d'entraînement (90) et par un élément de couplage (16) à un bras (22) monté de manière pivotante dans un point de palier (92) de la carrosserie du véhicule,
en position de rangement (46) de l'essuie-glace (70), le levier d'entraînement (20) faisant un angle (α) d'environ 90° avec l'élément de couplage (16) et cet élément de couplage (16) est relié au bras (22) par une articulation à rotule (32),
**caractérisé en ce que**
le levier d'entraînement (10) est réglable dans cette position de rangement (46) autour d'un axe de réglage (22) sensiblement parallèle à l'élément de couplage (16) et coupant l'axe longitudinal de l'arbre d'entraînement (90).

2. Bras d'essuie-glace à quatre articulations (14) selon la revendication 1,
**caractérisé en ce que**
l'élément de couplage (16) comporte une première pièce de couplage (26) articulée au levier d'entraînement (20) et une seconde pièce de couplage (28) articulée au bras (22) par l'articulation à rotule (32), les deux pièces de couplage (26, 28) étant reliées par une articulation de rotation (30) dont l'axe de rotation est dirigé transversalement à la direction longitudinale de la pièce de couplage (16).

3. Bras d'essuie-glace à quatre articulations (14) selon l'une des revendications précédentes,
**caractérisé en ce que**
l'extrémité de l'élément de couplage (16) du côté du bras est en forme de pièce de fixation (18) à laquelle est articulée la pièce d'articulation (36) de l'essuie-glace (70).

4. Bras d'essuie-glace à quatre articulations (14) selon l'une des revendications précédentes,
**caractérisé en ce que**
l'arbre d'entraînement (90) traverse une cavité élargie (128) du levier d'entraînement (20) et un écrou (112) serre le levier d'entraînement (20) par l'intermédiaire d'une pièce de serrage (108) adaptée à la cavité (128) contre l'épaulement (126) de l'arbre d'entraînement (90),
les surfaces de contact (118, 128) entre la pièce de serrage (108) et le levier d'entraînement (20) constituent une partie de la surface d'une rotule et
le levier d'entraînement (20) s'appuie contre l'épaulement (126) par une surface cylindrique (114, 116),
l'axe des surfaces cylindriques (114, 116) est l'axe de réglage (24) passant par le centre (124) de la rotule.

5. Bras d'essuie-glace à quatre articulations (14) selon la revendication 4,
**caractérisé en ce que**
la surface cylindrique (114) est formée dans une rondelle d'appui (106) qui vient contre l'épaulement (126) de l'arbre d'entraînement (90) autour duquel elle peut tourner.

6. Bras d'essuie-glace à quatre articulations (14) selon l'une des revendications précédentes,
**caractérisé en ce que**
l'angle de réglage (δ1, δ2) autour de l'axe de réglage (24) est limité par une butée (130).

7. Bras d'essuie-glace à quatre articulations (14) selon la revendication 6,
**caractérisé en ce que**
la butée est formée par un trou oblong (130) dans la direction de réglage sur le levier d'entraînement (20) avec l'arbre d'entraînement (90).

8. Bras d'essuie-glace à quatre articulations (14) selon l'une des revendications précédentes,
**caractérisé en ce que**
l'axe de réglage (24) passe dans la zone de fixation du levier d'entraînement (20).

9. Bras d'essuie-glace à quatre articulations (14) selon l'une des revendications précédentes,
**caractérisé en ce que**
le levier d'entraînement (20) est en tôle et la cavité (128) est réalisée par emboutissage profond.

10. Bras d'essuie-glace à quatre articulations (14) selon l'une des revendications précédentes,
**caractérisé en ce que**
la pièce de serrage (108) est reliée à l'arbre d'entraînement (90) par un profil d'entraînement (110), et sa section est différente d'une section circulaire.

11. Bras d'essuie-glace à quatre articulations (14) selon la revendication 10,
**caractérisé en ce que**
le profil d'entraînement (110) a une section polygonale.

12. Bras d'essuie-glace à quatre articulations (14) selon l'une des revendications 5 à 11,
**caractérisé en ce que**
le disque d'appui (106) est fixé à rotation sur l'arbre d'entraînement (90) par une bague de fixation (138) en matière plastique.

13. Bras d'essuie-glace à quatre articulations (14) selon l'une des revendications 5 à 11,
**caractérisé en ce que**
le disque d'appui (106) est fixé au levier d'entraînement (20) de manière pivotante autour de l'axe de réglage (24).

14. Bras d'essuie-glace à quatre articulations (14) selon la revendication 13,
**caractérisé en ce que**
le disque d'appui (106) est fixé au levier d'entraînement (20) par un anneau d'enclipsage (140) en matière plastique.

15. Bras d'essuie-glace à quatre articulations (14) selon la revendication 14,
**caractérisé en ce que**
le levier d'entrainement comporte une collerette 142 qui tient l'anneau d'enclipsage en matière plastique (140).

16. Bras d'essuie-glace à quatre articulations (14) selon la revendication 15,
**caractérisé en ce que**
le levier d'entraînement (20) comporte des cavités (144) dans lesquelles s'accroche l'anneau d'enclipsage en matière plastique (140).

17. Bras d'essuie-glace à quatre articulations (14) selon l'une des revendications précédentes,
**caractérisé en ce que**
les surfaces cylindriques (114, 116) ont des cannelures (132) parallèles à l'axe de réglage (24).

18. Bras d'essuie-glace à quatre articulations (14) selon l'une des revendications précédentes,
**caractérisé en ce que**
le levier d'entraînement (20) et la pièce de serrage (108) sont rugueuses ou cannelées au niveau de la surface de rotule (118) et les cannelures (132) du levier d'entraînement (120) croisent les cannelures (132) de la pièce de serrage (108).

19. Bras d'essuie-glace à quatre articulations (14) selon l'une quelconque des revendications précédentes,
**caractérisé en ce que**
la pièce de serrage (108) a des rainures (48) le long de sa périphérie.

20. Bras d'essuie-glace à quatre articulations (14) selon la revendication 19,
**caractérisé en ce que**
les rainures (48) se terminent juste avant les grandes surfaces frontales.

21. Procédé de réglage d'un bras d'essuie-glace à quatre articulations (14) selon l'une des revendications précédentes,
**caractérisé en ce qu'**
on adapte l'erreur normale (ϕ) seulement en position de rangement (46).
